(19) Europäisches Patentamt / European Patent Office / Office européen des brevets

(11) **EP 3 992 272 B1**

(12) **EUROPÄISCHE PATENTSCHRIFT**

(45) Veröffentlichungstag und Bekanntmachung des Hinweises auf die Patenterteilung:
**03.12.2025   Patentblatt 2025/49**

(51) Internationale Patentklassifikation (IPC):
**C12C 7/175** (2006.01)   **C12C 7/20** (2006.01)
**C12C 7/24** (2006.01)   **C12C 7/22** (2006.01)

(21) Anmeldenummer: **21195701.4**

(22) Anmeldetag: **09.09.2021**

(52) Gemeinsame Patentklassifikation (CPC):
**C12C 7/175; C12C 7/20; C12C 7/22; C12C 7/24**

(54) **VERFAHREN UND VORRICHTUNG ZUM HERSTELLEN ODER BEHANDELN EINER WÜRZE UND ENTSPRECHENDE VERWENDUNG**

METHOD AND EQUIPMENT FOR THE PRODUCTION OR TREATMENT OF A WORT AND CORRESPONDING USE

PROCÉDÉ ET APPAREIL DE FABRICATION OU DE TRAITEMENT D'UN MOÛT ET APPLICATION CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **03.11.2020   DE 102020128913**

(43) Veröffentlichungstag der Anmeldung:
**04.05.2022   Patentblatt 2022/18**

(73) Patentinhaber: **Ziemann Holvrieka GmbH**
**71636 Ludwigsburg (DE)**

(72) Erfinder:
• **GEHRIG, Klaus**
**71640 Ludwigsburg (DE)**
• **WASMUHT, Klaus Karl**
**91792 Ellingen (DE)**
• **BECHER, Tobias**
**71701 Schwieberdingen (DE)**

• **ZILLER, Konstantin**
**71638 Ludwigsburg (DE)**

(74) Vertreter: **Kuhnen & Wacker**
**Patent- und Rechtsanwaltsbüro PartG mbB**
**Prinz-Ludwig-Straße 40A**
**85354 Freising (DE)**

(56) Entgegenhaltungen:
GB-A- 1 115 970          GB-A- 939 011
US-A1- 2009 324 775

• LUDWIG NARZISS ET AL: "Verfahren mit Nachverdampfung im Vakuum - zwischen Whirlpool und Plattenk�hler", 30 November 2008, DIE BIERBRAUEREI; VOLUME 2 DIE TECHNOLOGIE DER W�RZEBEREITUNG, WILEY-VCH, PAGE(S) 526 - 528, ISBN: 978-3-527-32533-7, XP009541218

**Beschreibung**

Technisches Gebiet

Die vorliegende Erfindung stammt aus dem Gebiet der Getränkeherstellung, insbesondere der Bierherstellung, und betrifft ein Verfahren zum Herstellen oder Behandeln einer Würze, eine Vorrichtung zum wenigstens teilweisen Abtrennen von Feststoffen aus einer Würze, eine Würzebereitungsvorrichtung und eine Verwendung der erfindungsgemäßen Vorrichtung zum wenigstens teilweisen Abtrennen von Feststoffen aus einer Würze.

Stand der Technik

In herkömmlichen Würzebereitungsverfahren wird die Würze nach Abschluss der Würzekochung oder -heißhaltung in einem Whirlpool oder Setzdekanter überführt und die in der Würze enthaltenen Feststoffe aus der Würze teilweise entfernt, bevor die Würze auf die Anstelltemperatur gekühlt wird. Dabei umfassen die Feststoffe sowohl Feststoffe, die bereits vor der Würzekochung oder -heißhaltung in der Würze enthalten waren, als auch diejenigen Feststoffe, die bei der Würzekochung oder -heißhaltung entstanden sind (bspw. koaguliertes Eiweiß) oder im Rahmen der Würzekochung oder -heißhaltung der Würze zugegeben wurden (bspw. Hopfenbestandteile).

Dieser Trennschritt kostet Zeit und bringt technologische Nachteile mit sich, wie beispielsweise die Nachbildung von DMS aus DMS-Prekursoren (DMSP), welche sich negativ auf das Aroma des resultierenden Bieres auswirken. Gerade bei Einsatz eines Whirlpools wirkt sich dessen begrenzte Abscheidungsrate beispielsweise bei großen Hopfengaben negativ auf die Trennleistung aus.

Gattungsgemäße Verfahren und Vorrichtungen zum Abtrennen von Feststoffen aus einer Bierwürze sind dem Fachmann bekannt aus den Veröffentlichungen US 2009/324 775 A1, GB 939 011 A, GB 1 115 970 A und LUDWIG NARZISS ET AL: "Verfahren mit Nachverdampfung im Vakuum - zwischen Whirlpool und Plattenkühler", 30. November 2008 (2008-11-30), DIE BIERBRAUEREI; VOLUME 2 DIE TECHNOLOGIE DER WÜRZEBEREITUNG, WILEY-VCH, PAGE(S) 526 - 528, XP009541218, ISBN: 978-3-527-32533-7.

Aufgabe der Erfindung

Daher ist es eine Aufgabe der vorliegenden Erfindung, ein verbessertes Verfahren zum Herstellen oder Behandeln einer Würze bereitzustellen, welches eine Zeitersparnis gegenüber herkömmlichen Verfahren ermöglicht. Eine weitere Aufgabe der vorliegenden Erfindung ist, eine entsprechende Vorrichtung und eine entsprechende Verwendung bereitzustellen.

Definitionen

Erfindungsgemäß bedeutet der Begriff "Kochen" der Würze ein blasenbildendes oder sprudelndes Kochen bzw. Sieden der Würze bei der Koch- bzw. Siedetemperatur.

Entsprechend bedeutet der Begriff "Kochtemperatur" der Würze erfindungsgemäß die Temperatur oder der Temperaturbereich, bei welcher bzw. in welchem die Würze ein blasenbildendes oder sprudelndes Kochen/Sieden zeigt. Die Kochtemperatur hängt von der Zusammensetzung der Würze und insbesondere von dem an der Würze anliegenden Druck ab. Beispiele für die Kochtemperatur sind 100 °C oder ein Bereich von 98 bis 102 °C.

Erfindungsgemäß bedeutet ein "Heißhalten" der Würze ein Halten der Temperatur der Würze zwischen der Kochtemperatur und 8 °C unterhalb der Kochtemperatur, vorzugsweise zwischen der Kochtemperatur und 6 °C unterhalb der Kochtemperatur, insbesondere zwischen der Kochtemperatur und 4 °C unterhalb der Kochtemperatur.

Entsprechend umfasst der Begriff "Heißhaltetemperatur" der Würze erfindungsgemäß einen Temperaturbereich zwischen der Kochtemperatur und 8 °C unterhalb der Kochtemperatur, vorzugsweise zwischen der Kochtemperatur und 6 °C unterhalb der Kochtemperatur, insbesondere zwischen der Kochtemperatur und 4 °C unterhalb der Kochtemperatur. Beispiele für die Heißhaltetemperatur sind die Temperaturbereiche 92 bis 100 °C, 94 bis 100 °C oder 96 bis 100 °C.

Erfindungsgemäß wird unter dem Begriff "Ausschlagen" der Würze ein Abziehen oder Ausbringen der Würze aus einer Würzepfanne (Sudpfanne), einem Würzeerwärmer oder einer Würzeheißhalteeinrichtung, vorzugsweise nach dem Abschluss des Kochens oder Heißhaltens der Würze, verstanden.

Erfindungsgemäß wird unter dem Begriff "Fluidverbindung" zwischen der Trenneinrichtung und einem Gefäß oder zwischen zwei Gefäßen eine unmittelbare, direkte Verbindung über eine Leitung oder einen Schlauch verstanden, die zur Übertragung eines Fluids, insbesondere der Würze, geeignet ist. Sofern in der vorliegenden Offenbarung nicht anders erwähnt, befindet sich zwischen der Trenneinrichtung und dem einem Gefäß oder zwischen den beiden Gefäßen keine weitere Vorrichtung, wie beispielsweise ein Wärmeübertrager oder ein Pufferspeicher; hiervon ausgenommen sind jedoch üblicherweise in Leitungen vorgesehene Einbauten, wie beispielsweise Ventile, Klappen, Sensoren, Dichtungen, Flansche, Rohrverbindungen oder dergleichen.

Erfindungsgemäß wird unter der "G-Zahl" die Beschleunigungsgröße einer zum Zentrifugieren geeigneten Trennvorrichtung, insbesondere einer Zentrifuge, beim Zentrifugieren von Würze verstanden. So ist für einen Zentrifugalseparator oder eine Zentrifuge die "G-Zahl" erfindungsgemäß wie folgt definiert [Einheiten sind in Klammern angegeben]:

$$\text{G-Zahl } [g] = \frac{2 * \text{Durchmesser der Zentrifugen- oder Separatortrommel } [mm] * \pi^2 * (\text{Drehzahl } [\frac{1}{min}])^2}{\text{Erdbeschleunigung } [\frac{m}{s^2}] * 3{,}6 * 10^6}$$

Dabei ist die Erdbeschleunigung g = 9,81 m/s².

Erfindungsgemäß wird unter dem Begriff "wenigstens teilweises Abtrennen" der Feststoffe der Würze ein teilweises oder ein im Rahmen der technischen Machbarkeit vollständiges Abtrennen der in der Würze enthaltenen Feststoffe verstanden.

Erfindungsgemäß wird unter der Zeitangabe "unmittelbar nach dem Abtrennen" oder "unmittelbar nach dem wenigstens teilweisen Abtrennen" der Feststoffe aus der Würze ein Zeitpunkt von höchstens 20 Sekunden, nachdem die von Feststoffen (teilweise) befreite Würze die Trennvorrichtung verlassen hat, verstanden.

Erfindungsgemäß wird unter der Zeitangabe "unmittelbar nach dem Beenden des Abtrennens" der Feststoffe aus der Würze ein Zeitpunkt von höchstens 2 Minuten, vorzugsweise höchstens 1 Minute, insbesondere höchstens 30 Sekunden, nachdem die von Feststoffen wenigstens teilweise befreite Würze, vorzugsweise der Teilstrom der von Feststoffen wenigstens teilweise befreiten Würze, mit dem Restsud wieder zum Gesamtsud vereinigt und dieser vorzugsweise homogenisiert worden ist, verstanden.

Erfindungsgemäß wird die Trübung der Würze gemäß der Brautechnischen Analysenmethode der Methodensammlung der Mitteleuropäischen Brautechnischen Analysenkommission (MEBAK); Band 2; 4. Auflage, neubearbeitet und ergänzt; 2002, herausgegeben vom Vorsitzenden Prof. Dr. H. Miedaner; Methode 1.3, bestimmt.

Zusammenfassung der Erfindung

Die vorstehend genannte Aufgabe wird durch die Gegenstände der unabhängigen Ansprüche gelöst. Vorteilhafte Ausführungsformen der Erfindung sind Gegenstand der abhängigen Ansprüche.

Erfindungsgemäß wird ein Verfahren zum Herstellen oder Behandeln einer Würze, vorzugsweise zum Kochen oder Heißhalten einer Würze, vorgeschlagen, wobei das Verfahren wenigstens die Schritte umfasst:

(a) Kochen oder Heißhalten der Würze; und

(b) während des Kochens oder des Heißhaltens der Würze oder während die Würze eine Koch- oder Heißhaltetemperatur aufweist, wenigstens teilweises Abtrennen von Feststoffen aus der Würze mittels Zentrifugieren.

Dabei wird während des Zentrifugierens eine G-Zahl ≥ 1.000 g, vorzugsweise zwischen 1.000 und 12.000 g, vorzugsweise zwischen 2.000 und 12.000 g, vorzugsweise zwischen 2.000 und 10.000 g, vorzugsweise zwischen 3.000 und 10.000 g, vorzugsweise zwischen 5.000 und 10.000 g, insbesondere zwischen 5.000 und 8.000 g, erreicht, wobei g = 9,81 m/s² ist.

Dabei wird zum Abtrennen der Feststoffe ein Teilstrom (TS) der Würze (W) einem ersten Gefäß (G1), welches die Würze (W) bei der Koch- oder Heißhaltetemperatur enthält, entnommen, die Feststoffe werden teilweise oder vollständig aus dem Teilstrom (TS) der Würze (W) abgetrennt, und der teilweise oder vollständig von Feststoffen befreite Teilstrom (TS) der Würze (W) wird dem ersten Gefäß (G1) oder einem zweiten Gefäß (G2) zugeführt, wobei das zweite Gefäß (G2) die Würze (W) bei Koch- oder Heißhaltetemperatur enthält.

Dabei ist das erste Gefäß (G1) und das zweite Gefäß (G2) jeweils und unabhängig voneinander ausgewählt aus einer Gruppe, die besteht aus: einer Würzepfanne, einer Würzeheißhalteeinrichtung, einem Würzeerwärmer, vorzugsweise einem Außenkocher, einem Würzespeicher und einer Leitung (L).

Da nach dem erfindungsgemäßen Verfahren das Abtrennen der Feststoffe, insbesondere des Heiß- oder Kochtrubs, aus der Würze bereits während des Kochens bzw. des Heißhaltens der Würze oder während die Würze eine Koch- oder Heißhaltetemperatur aufweist, erfolgt, ist erfindungsgemäß ein herkömmliches Abtrennen der Feststoffe, beispielsweise in einem Whirlpool, nicht mehr erforderlich und kann folglich unterbleiben bzw. ausgeschlossen sein.

Damit kann der herkömmliche, separate Schritt der Würzeklärung eingespart werden. Die Würze kann folglich nach Abschluss der Koch- bzw. Heißhaltephase ohne weitere Feststoffabtrennung direkt der Würzekühlung zugeführt werden. Hierdurch wird nicht nur die für den Whirlpoolschritt erforderliche Zeitdauer, welche einschließlich Befüllen, Whirlpoolrast, und Entleeren des Gefäßes 30 bis 60 min umfassen kann, eingespart. Falls die Benutzung eines Whirlpools oder Setzdekanters dennoch vorgesehen oder aufgrund einer vorgegebenen Sudanlagenstruktur unvermeidbar ist, kann zumindest die Whirlpoolrast mit üblicherweise 20 bis 30 Minuten eingespart werden.

Es werden erfindungsgemäß auch die vom herkömmlichen Whirlpoolschritt herrührende Zunahme der DMS-Konzentration in der Würze und damit im resultierenden Bier sowie sonstige technologische Nachteile, welche auf die der Würzekochung nachgeschaltete Heißtrubabtrennung zurückzuführen sind, vermieden. Mit einem Verzicht auf eine separate Würzeklärung in einem Whirlpool oder Setzdekanter wird auch der Wasserverbrauch bei der Würzeherstellung gesenkt. Dies liegt zum einen daran, dass der Heißtrub nicht mehr aus dem Whirlpool oder Setzdekanter mit Wasser ausgetragen werden muss, zum anderen daran, dass die Oberflächen des Innenraums des Whirlpools oder Setzdekanters als solche nicht mehr verschmutzen und somit nach einem oder mehreren Suden gespült werden müssen.

Des Weiteren hat sich herausgestellt, dass die Verluste an Würze bei der erfindungsgemäßen Abtrennung der Feststoffe gegenüber der Abtrennung im Whirlpool oder Setzdekanter verringert sind.

Eine überraschende Wirkung der vorliegenden Erfindung ist, dass die erfindungsgemäß hergestellte Würze im Vergleich zu einer analog hergestellten Würze, welche jedoch ohne Zentrifugieren hergestellt worden ist, einen stark erhöhten Gehalt an Iso-$\alpha$-Säuren bzw. Bittereinheiten aufweist. Damit geht eine erfindungsgemäß gesteigerte Hopfenausbeute einher.

Ein weiterer Vorteil des erfindungsgemäßen Verfahrens ist, dass sich der Feststoff- bzw. Trubabtrenngrad gezielt und auf einfache Weise einstellen lässt. Hierdurch kann die Würzezusammensetzung, insbesondere die Zink- und Fettsäurekonzentrationen, gezielt gesteuert werden, was eine Auswirkung auf die resultierende Gärung und Bierqualität hat. So kann im Rahmen der vorliegenden Erfindung aufgrund eines ausreichenden Gehalts an ungesättigten, langkettigen Fettsäuren in der erfindungsgemäß hergestellten Würze und der damit verbundenen guten Versorgung der Hefe die Würzebelüftung vor dem Anstellen gedrosselt werden, was zu einer Steigerung der Qualität des resultierenden Bieres führt.

Des Weiteren hat sich herausgestellt, dass mittels des erfindungsgemäßen Verfahrens auch nicht aufgeschlossene Stärkepartikel problemlos aus der Würze entfernen lassen. Gerade durch den erfindungsgemäß vorgesehenen Einsatz vergleichsweise hoher Zentrifugalkräfte bzw. G-Zahlen zur Abtrennung der Feststoffe kann, wenn gewünscht, eine vollständigere Abtrennung der Feststoffpartikel aus der Würze im Vergleich zum klassischen Whirlpool oder Setzdekanter erzielt werden. Ferner lässt sich beim erfindungsgemäßen Verfahren die im resultierenden Bier als unangenehm empfundene Eiweißbittere signifikant verringern.

In Zusammenhang mit der erfindungsgemäßen Feststoffabtrennung aus der Würze haben die Erfinder zudem höhere Endvergärungsgrade festgestellt, was auch als ein Indikator für eine gute Hefeversorgung gedeutet wird. Ferner ist die Viskosität der Würze während der thermischen Behandlung aufgrund des verringerten Feststoffgehalts gegenüber einer vergleichbaren, herkömmlichen Würzekochung (gleiche Würzezusammensetzung und Kochtemperatur) ohne Feststoffabtrennung verringert, was rheologische Vorteile, wie beispielsweise ein verringerter Strömungswiderstand, zur Folge hat. Davon abgesehen ist die Abtrennung der Feststoffpartikel aufgrund der erfindungsgemäßen, im Vergleich zum Whirlpoolschritt höheren Temperatur der Würze während der Abtrennung erleichtert.

Vorteilhafte Ausführungsformen des erfindungsgemäßen Verfahrens sind Gegenstand der abhängigen Ansprüche.

So kann beim erfindungsgemäßen Verfahren das Abtrennen der Feststoffe aus der Würzezwischen dem Erreichen der Koch- oder Heißhaltetemperatur der Würze, vorzugsweise zwischen 5 min, vorzugsweise 10 min, insbesondere 20 min, nach dem Erreichen der Koch- oder Heißhaltetemperatur der Würze, und 40 min, vorzugsweise 35 min, nach dem Erreichen der Koch- oder Heißhaltetemperatur der Würze erfolgen. Das Abtrennen der Feststoffe kann vorzugsweise auch auf die vorstehend genannten Zeiträume beschränkt sein.

Zudem kann das Abtrennen der Feststoffe aus der Würze spätestens beim Beginn des Ausschlagens der Würze, vorzugsweise 5 min vor Beginn des Ausschlagens der Würze, insbesondere 10 min vor Beginn des Ausschlagens der Würze, enden.

Das erfindungsgemäße Verfahren kann dahingehend beschränkt sein, dass das Beenden des Abtrennens der Feststoffe aus der Würze bedeutet, dass nach diesem Beenden kein weiteres oder erneutes Abtrennen von Feststoffe aus der Würze wenigstens bis einschließlich der Würzekühlung mehr erfolgt.

Erfindungsgemäß kann die Abtrennung der Feststoffe während der gesamten Koch- bzw. Heißhaltephase oder während die Würze eine Koch- oder Heißhaltetemperatur aufweist, erfolgen. Vorzugsweise kann das Abtrennen jedoch auf die vorstehend beschriebenen Zeiträume beschränkt werden bzw. sein. Nach der Kenntnis der Erfinder ist die Ausbildung der Feststoffpartikel in einem Zeitraum zwischen 20 und 30 Minuten nach Erreichen der Koch- oder Heißhaltetemperatur, also 20 bis 30 Minuten nach Kochbeginn, am intensivsten und die ausgebildeten Partikel am größten, weswegen eine Abtrennung, welche diesen Zeitraum umfasst, am effektivsten ist. Nach der Erkenntnis der Erfinder werden ab 35 Minuten und insbesondere ab 40 Minuten nach Erreichen der Kochtemperatur der Würze keine wesentlichen Trubmengen mehr gebildet, sodass eine Abtrennung der Feststoffpartikel nach diesen Zeitpunkten weniger effizient ist. Folglich kann erfindungsgemäß die Abtrenndauer auf einen Zeitraum bis 35 oder bis 40 Minuten nach Erreichen der Kochtemperatur der Würze beschränkt werden. Umgekehrt hat sich bei Erreichen der Koch- bzw. Heißhaltetemperatur höchstens ein Teil der Feststoffe gebildet, so dass es nicht zwingend ist, schon zum Zeitpunkt des Erreichens der Kochtemperatur oder sogar davor mit der Feststoffabtrennung zu beginnen. Durch die erfindungsgemäß mögliche Beschränkung der Abtrenndauer kann die für die Abtrennung der Feststoffpartikel erforderliche Energie am effizientesten eingesetzt werden. Ferner werden andere technologische Nachteile, wie beispielsweise die Gefahr des Inkontaktkommens der Würze mit Sauerstoff oder Abstrahlverluste der heißen Würze außerhalb der Würzepfanne oder der Heißhalteeinrichtung und damit Energieverluste, minimiert.

Erfindungsgemäß kann ferner vorgesehen sein, dass zwischen dem Beginn des Ausschlagens der Würze und dem Abschluss des Kühlens der Würze auf Anstelltemperatur kein Abtrennen von Feststoffen aus der Würze, insbesondere kein Abtrennen von Feststoffen aus der Würze mittels eines Whirlpools oder eines Setzdekanters, erfolgt. Alternativ kann ferner vorgesehen sein, dass zwischen dem Abschluss des Ausschlagens der Würze und dem Abschluss des Kühlens der Würze auf Anstelltemperatur kein Abtrennen von Feststoffen aus der Würze, insbesondere kein Abtrennen von Feststoffen mittels eines Whirlpools oder eines Setzdekanters, erfolgt.

Durch den Verzicht der separaten, nachgelagerten Abtrennung von Feststoffen nach dem Abschluss der Koch- bzw. Heißhaltephase können die vorstehend diskutierte Zeitersparnis und die vorstehend diskutierten technologischen Vorteile erzielt werden. Zudem wird das Würzebereitungsverfahren wegen des Wegfalls eines zusätzlichen Schrittes vereinfacht und die hierfür erforderliche Sudanlage wird weniger aufwendig und hat aufgrund des Wegfalls des Whirlpools oder Setzdekanters insbesondere einen geringeren Platz- bzw. Raumbedarf. Darüber hinaus kommt die heiße Würze mit weniger Sauerstoff in Berührung und ihre thermische Belastung verringert sich, wenn sie ohne Durchfahren eines Whirlpools oder Setzdekanters direkt dem Würzkühler zugeführt wird.

Des Weiteren kann erfindungsgemäß alternativ vorgesehen sein, dass das Abtrennen der Feststoffe aus der Würze spätestens mit dem Abschluss des Ausschlagens der Würze, vorzugsweise 2 min vor dem Abschluss des Ausschlagens der Würze, insbesondere 5 min vor dem Abschluss des Ausschlagens der Würze, endet. Dies bedeutet, dass nach dem Abschluss des Ausschlagens der Würze keine weitere Abtrennung von Feststoffen aus der Würze mehr bis einschließlich der Würzekühlung erfolgt.

Hierdurch ist es möglich, die für das Ausschlagen der Würze erforderliche Zeitdauer zusätzlich zur Dauer des Kochens oder Heißhaltens für die FeststoffAbtrennung zu nutzen. Alternativ kann in einer Ausführungsform des erfindungsgemäßen Verfahrens vorgesehen sein, die Feststoffe nur während der Zeitdauer des Ausschlagens abzutrennen, d.h., dass das Abtrennen der Feststoffe zwischen dem Beginn und dem Abschluss des Ausschlagens erfolgt und auf diesen Zeitraum beschränkt ist.

Der Vorteil dieser Verfahrensvariante bzw. des Abtrennens während des Ausschlagens ist, dass die Würze oder ein Teilstrom derselben beispielsweise der Würzepfanne entnommen wird, die Feststoffe abgetrennt werden, und die von den Feststoffen (teilweise) befreite Würze nicht mehr in die Würzepfanne zurückgeführt werden muss, sondern unmittelbar weiterverarbeitet werden kann. Hierdurch wird ein Vermischen des von Feststoffen befreiten Teilstroms mit dem noch feststoffhaltigen Restsud vermieden, wodurch ausgeschlossen werden kann, dass Teilvolumina eines Suds quasi zwei- oder mehrfach der Feststoffabtrennung unterzogen werden. Folglich steigt die Effizienz der Feststoffabtrennung bei dieser Vorgehensweise.

Das Abtrennen der Feststoffe aus der Würze kann vor einer ersten Hopfengabe, vor einer zweiten Hopfengabe und/oder vor einer dritten Hopfengabe zur Würze erfolgen.

So haben die Erfinder festgestellt, dass sich mit dem erfindungsgemäßen Verfahren die Hopfenausbeute steigern lässt. Dies gilt insbesondere dann, wenn die Abtrennung der Feststoffpartikel vor einer Hopfengabe geschieht. Indem die Feststoffpartikel bereits vor dem Kontakt mit den Hopfenteilchen teilweise oder vollständig aus der Würze abgetrennt werden, binden die verbleibenden Feststoffe weniger Hopfenbestandteile. Erfindungsgemäß verbleiben aufgrund der verringerten Feststoffkonzentration in der Würze mehr wertvolle Hopfenbestandteile in der Würze und können zu einer erhöhten Hopfenausbeute, beispielsweise in Gestalt höherer Bittereinheiten im resultierenden Bier, beitragen. Ferner wurde beobachtet, dass sich die Isomerisierung der Hopfenbestandteile aufgrund der erfindungsgemäßen Feststoffabtrennung verbessert, insbesondere eine höhere Konzentration an Iso-$\alpha$-Säuren erreicht wird, wodurch die Hopfenausbeute weiter erhöht wird. Aufgrund der verbesserten Hopfenausbeute kann eine Verringerung der Menge der eingesetzten Hopfenrohstoffe bei vergleichbarer Bierqualität erzielt werden. Erfindungsgemäß kann ferner beispielsweise in Zusammenhang mit der Feststoffabtrennung vor der Hopfung vorgesehen sein, die in die Würze eingebrachten Hopfenpartikel durch eine zweite Feststoffabtrennung nach der Hopfung, beispielsweise während des Ausschlagens der Würze, aus der Würze zu entfernen.

Erfindungsgemäß kann das Abtrennen der Feststoffe aus der Würze kontinuierlich erfolgen.

Darüber hinaus kann das Abtrennen der Feststoffe aus der Würze mittels einer Trenneinrichtung, vorzugsweise eines Zentrifugalseparators oder einer Zentrifuge, insbesondere eines Tellerseparators oder eine Dekantierzentrifuge, erfolgen.

Erfindungsgemäß kann der Gesamtsud bzw. Gesamtbatch der Würze, also die Gesamtmenge der Würze in der Würzepfanne oder Würzeheißhalteeinrichtung, nach dem Beenden des Abtrennens der Feststoffe eine Trübung zwischen 20 und 400 EBC, vorzugsweise zwischen 50 und 150 EBC, aufweisen. Bei einer Trübung der Würze im angegebenen Bereich kann eine gute Hefeversorgung bei der anschließenden Vergärung der Würze sichergestellt werden.

Die kontinuierliche Betriebsweise der Feststoffabtrennung erfordert im Gegensatz zur Batchbetriebsweise kleinere und damit platz- und kostensparende Anlagenkomponenten für die Abtrennung. Hierzu haben sich als besonders effizient die vorstehend genannten Zentrifugalseparatoren oder Zentrifugen erwiesen. Die Einstellung eines Trübungsgrads im vorstehend genannten Bereich bedeutet einerseits eine hinreichende Abtrennung der Feststoffe zur Erzielung der damit verbundenen Vorteile, wie beispielsweise die vorstehend diskutierte erhöhte Hopfenausbeute. Andererseits wird die Würze hierdurch nicht derart blank bzw. klar, dass es im nachfolgenden Schritt der Gärung zu Mangelerscheinungen (insbesondere ein Mangel an Zink und langkettigen, ungesättigten Fettsäuren, C16 bis C18:3) in Bezug auf die Ernährung der Hefe kommt. Mit dem erfindungsgemäßen Verfahren lässt sich die Würzezusammensetzung auch unabhängig vom verwendeten Läuter- und Koch-/Heißhaltesystem optimal einstellen.

Des Weiteren kann zum Abtrennen der Feststoffe ein Teilstrom der Würze einem ersten Gefäß, welches die Würze oder ein Teilvolumen der Würze bei der Koch- oder Heißhaltetemperatur enthält, entnommen werden, die Feststoffe können teilweise oder vollständig aus dem Teilstrom der Würze abgetrennt werden, und der teilweise oder vollständig von Feststoffen befreite Teilstrom der Würze kann dem ersten Gefäß oder einem zweiten Gefäß zugeführt werden, wobei das zweite Gefäß die Würze bei der Koch- oder Heißhaltetemperatur enthält. Dabei kann das erste Gefäß und das zweite Gefäß jeweils und unabhängig voneinander eine Würzepfanne, eine Würzeheißhalteeinrichtung, ein Würzeerwärmer, vorzugsweise ein Außenkocher, ein Würzespeicher oder eine Leitung sein. Bevorzugt ist dabei, wenn das erste Gefäß die Würzepfanne oder die Würzeheißhalteeinrichtung ist. Alternativ kann jedoch auch vorgesehen sein, dass die Würze der Würzepfanne oder einer Würzeheißhalteeinrichtung als dem ersten Gefäß entnommen wird, die Feststoffe teilweise oder vollständig aus der Würze abgetrennt werden, und die von Feststoffen (teilweise) befreite Würze dem Würzeerwärmer, dem Würzespeicher oder dem Puffergefäß als dem zweiten Gefäß zugeführt wird.

Dabei kann das Abtrennen der Feststoffe vorzugsweise derart erfolgen, dass der Teilstrom der Würze unmittelbar nach dem Abtrennen der Feststoffe mittels der Trenneinrichtung eine Trübung zwischen 20 und 100 EBC, vorzugsweise zwischen 40 und 80 EBC, aufweist.

Das erfindungsgemäße Verfahren weist einen hohen Grad an Flexibilität auf. So kann zum Abtrennen der Feststoffe aus der Würze ein Teilstrom der Würze beispielsweise der Würzepfanne entnommen werden, die Feststoffe mittels eines Separators abgetrennt, und der Teilstrom der von Feststoffen weitgehend befreiten Würze anschließend wieder der Würzepfanne zugeführt werden. Die Erfindung ist jedoch nicht darauf beschränkt. So kann die Entnahmestelle auch beispielsweise ein Außenkocher (oder eine andere Würzeerwärmungs- oder Würzeheißhalteeinrichtung) oder eine Leitung stromaufwärts oder stromabwärts zum Außenkocher (oder zu einer anderen Würzeerwärmungs- oder Würzeheißhalteeinrichtung), beispielsweise unmittelbar vor oder nach dem Außenkocher, sein. Entsprechend ist auch die Zuführ- bzw. Einspeisestelle nicht auf die Würzepfanne beschränkt, sondern kann auch ein anderes, würzeführendes Gefäß sein.

Die Erfinder haben ferner beobachtet, dass die vorstehend beschriebenen erfindungsgemäßen Wirkungen besonders ausgeprägt sind, wenn das Abtrennen der Feststoffe zu einer Resttrübung der Würze unmittelbar nach dem Abtrennen im Bereich von 20 bis 100 EBC, vorzugsweise zwischen 40 und 80 EBC, führt.

In vorrichtungstechnischer Hinsicht wird die vorstehend genannte Aufgabe durch die erfindungsgemäße Vorrichtung nach Anspruch 10 und die Würzebereitungsvorrichtung nach Anspruch 13 gelöst. Die Vorteile des vorstehend beschriebenen, erfindungsgemäßen Verfahrens gelten für die erfindungsgemäße Vorrichtung, die erfindungsgemäße Würzebereitungsvorrichtung und die erfindungsgemäße Verwendung analog.

So wird erfindungsgemäß eine Vorrichtung zum wenigstens teilweisen Abtrennen von Feststoffen aus einer Würze während des Kochens oder Heißhaltens der Würze oder während die Würze eine Koch- oder Heißhaltetemperatur aufweist, vorgeschlagen. Die Vorrichtung ist vorzugsweise zum Durchführen des Schritts (b) des erfindungsgemäßen Verfahrens geeignet.

Die erfindungsgemäße Vorrichtung weist wenigstens eine Trenneinrichtung zum wenigstens teilweisen Abtrennen von Feststoffen aus der Würze, vorzugsweise aus einem Teilstrom bzw. Teilvolumen der Würze, mittels Zentrifugieren auf. Ferner weist die Vorrichtung ein erstes Gefäß auf, wobei das erste Gefäß die Würze oder ein Teilvolumen der Würze bei der Koch- oder Heißhaltetemperatur enthält.

Die Trenneinrichtung ist geeignet, während des Zentrifugierens eine G-Zahl $\geq$ 1.000 g, vorzugsweise zwischen 1.000 und 12.000 g, vorzugsweise zwischen 2.000 und 12.000 g, vorzugsweise zwischen 2.000 und 10.000 g, vorzugsweise zwischen 3.000 und 10.000 g, vorzugsweise zwischen 5.000 und 10.000 g, insbesondere zwischen 5.000 und 8.000 g, zu erreichen, wobei g = 9,81 m/s$^2$ ist.

Ein Einlauf der Trenneinrichtung steht mit dem ersten Gefäß über eine Einlaufleitung in Fluidverbindung. Das erste Gefäß ist eine Würzepfanne, eine Würzeheißhalteeinrichtung, ein Würzeerwärmer, vorzugsweise ein Außenkocher, ein Würzespeicher oder eine Leitung. Darüber hinaus ist ein Auslauf der Trenneinrichtung mit dem ersten Gefäß oder einem zweiten Gefäß über eine Auslaufleitung in Fluidverbindung. Das zweite Gefäß enthält die Würze oder ein Teilvolumen der Würze bei der Koch- oder Heißhaltetemperatur. Das zweite Gefäß ist eine Würzepfanne, eine Würzeheißhalteeinrichtung, ein Würzeerwärmer, vorzugsweise ein Außenkocher, ein Würzespeicher oder eine Leitung.

Die erfindungsgemäße Vorrichtung kann dadurch weitergebildet sein, dass das erste Gefäß die Würzepfanne oder die Würzeheißhalteeinrichtung und das zweite Gefäß der Würzespeicher oder die Leitung ist.

Weiter ist die Trenneinrichtung vorzugsweise zum kontinuierlichen oder diskontinuierlichen Abtrennen von Feststoffen aus der Würze geeignet. Die Trenneinrichtung kann insbesondere eine Zentrifuge, vorzugsweise ein Tellerseparator oder eine Dekanterzentrifuge, sein. Ferner kann die Trenneinrichtung geeignet sein, die Würze, vorzugsweise die Würze des Teilstroms, unmittelbar nach dem teilweisen oder vollständigen Abtrennen der Feststoffe auf eine Trübung zwischen 20 und 100 EBC, vorzugsweise zwischen 40 und 80 EBC, einzustellen.

Der Einsatz einer Zentrifuge zur Abtrennung der Feststoffe ist besonders vorteilhaft, da sie eine kompakte Bauweise und damit einen geringen Platzbedarf in der Sudanlage aufweist. Ferner eignet sie sich zur kontinuierlichen Abtrennung der Feststoffe, wobei die Würze nur für kurze Zeit, vorzugsweise wenige Minuten, dem Würzebatch bzw. Gesamtsud, beispielsweise der Würzepfanne, entnommen werden muss, um die Abtrennung durchzuführen. Durch die nur vergleichsweise kurze Entnahme des Würzeteilstroms vom Hauptbatch der Würze während des Kochens oder Heißhaltens wird eine hinreichende Homogenität der Würze sichergestellt. In anderen Worten: die zeitlich kurze Entnahme der Würze aus dem Hauptbatch zur erfindungsgemäßen Feststoffabtrennung ist aus Sicht der thermischen Behandlung vernachlässigbar. Ebenfalls ist der Temperaturverlust bzw. die Wärmeabstrahlung bei derart kurzen Entnahmen vernachlässigbar gering.

Die Vorteile der vorstehend beschriebenen Verschaltungen und Ausgestaltungen der erfindungsgemäßen Vorrichtung sind zudem auch der nachfolgenden Figurenbeschreibung zu entnehmen.

Erfindungsgemäß kann ferner vorgesehen sein, dass zwischen der erfindungsgemäßen Vorrichtung und einem Würzekühler, vorzugsweise zwischen der Trennvorrichtung und einem Würzekühler, keine zum Abtrennen von Feststoffen aus der Würze geeignete Vorrichtung, insbesondere kein Whirlpool und kein Setzdekanter, vorhanden oder angeordnet ist.

Ferner wird eine Würzebereitungsvorrichtung zum Herstellen einer Würze in der Bierbrauerei oder Getränkeindustrie nach Anspruch 13 vorgeschlagen, wobei die Würzebereitungsvorrichtung die erfindungsgemäße Vorrichtung aufweist. Vorzugsweise weist die Würzebereitungsvorrichtung außer der erfindungsgemäßen Trennvorrichtung wie vorstehend beschrieben keine zum Abtrennen von Feststoffen aus der Würze geeignete Vorrichtung, insbesondere keinen Whirlpool und keinen Setzdekanter, auf.

Schließlich wird die erfindungsgemäße Aufgabe durch die Verwendung der erfindungsgemäßen Vorrichtung nach Anspruch 14 gelöst.

Die Erfindung umfasst demnach ferner die Verwendung der erfindungsgemäßen Vorrichtung zum wenigstens teilweisen Abtrennen von Feststoffen aus einer Würze während des Kochens oder Heißhaltens der Würze oder während die Würze eine Koch- oder Heißhaltetemperatur aufweist.

Dabei kann der Gesamtsud bzw. Gesamtbatch der Würze nach dem Beenden des Abtrennens der Feststoffe eine Trübung zwischen 20 und 400 EBC, vorzugsweise zwischen 50 und 150 EBC, aufweisen. Ferner kann die Würze eines Teilstroms derselben unmittelbar nach dem wenigstens teilweisen Abtrennen der Feststoffe auf eine Trübung zwischen 20 und 100 EBC, vorzugsweise zwischen 40 und 80 EBC, eingestellt werden bzw. sein.

Die vorstehend für das erfindungsgemäße Verfahren diskutierten Vorteile gelten für die erfindungsgemäße Vorrichtung, Würzebereitungsvorrichtung und Verwendung analog. Vorteilhafte Ausführungsformen der erfindungsgemäßen Vorrichtung und Verwendung sind jeweils Gegenstand der abhängigen Ansprüche. Die in Zusammenhang mit der vorliegenden Erfindung diskutierten Merkmale des erfindungsgemäßen Verfahrens bzw. der erfindungsgemäßen Vorrichtung lassen sich jeweils einzeln oder in Kombination analog mit der erfindungsgemäßen Verwendung unter Erzielung der analogen Vorteile verknüpfen bzw. kombinieren.

Es ist Teil der Offenbarung der vorliegenden Erfindung, dass die erfindungsgemäß beanspruchten Gegenstände (Verfahren, Vorrichtung und Verwendung) nicht auf bestimmte Maischetrennungstechnologien oder Würze-Koch-/-Heißhaltetechnologien beschränkt sind, sondern ausdrücklich mit allen aus dem Stand der Technik bekannten Läutertechnologien, wie beispielsweise Läuterbottich, Maischefilter oder Drehscheibenfilter, und allen Arten der thermischen Würzebehandlung kombinierbar sind.

Beispielhafte Ausführungsformen

In der nachfolgenden Tabelle sind die Ergebnisse einer Untersuchung dargestellt, bei welcher die Feststoffe während der thermischen Behandlung einer Würze erfindungsgemäß abgetrennt wurden. Die Würze stammt aus einem Allmalzsud, wobei die Maischetrennung mittels eines Drehscheibenfilters erfolgte. Bei der thermischen Behandlung der Würze mit einem Innenkocher betrug die Koch- bzw. Heißhaltetemperatur 99 °C und die Koch-/Heißhaltezeit 60 min.

Dabei wurde dem Gesamtsud der Würze (8 hl) in der Würzepfanne ab 20 Minuten nach Kochbeginn kontinuierlich ein Teilstrom mit einem Volumenstrom von 13,7 bis 20 hl/h entnommen, die Feststoffpartikel dieses Teilstroms mittels einer Tellerzentrifuge bei einer Drehzahl von 7.200 bis 7.400 Upm (Tellerradius: 13,5 cm; G-Zahl: ca. 7.800 bis 8.300 g) kontinuierlich abgetrennt und der so von Feststoffpartikeln befreite Teilstrom wieder der Würzepfanne zugeführt. Die Feststoffabtrennung erfolgte bis zum Kochende. Zu Beginn der Abtrennung war die Trübung der Würze im Einlauf der Zentrifuge 1.550 EBC. Die Abtrennung erfolgte derart, dass die Trübung der Würze am Auslauf der Zentrifuge immer zwischen 60 und 70 EBC betrug. Bei Kochende (60 Minuten nach Kochbeginn) wies die Würze des Gesamtsuds in der Würzepfanne eine Trübung von 190 EBC auf (erfindungsgemäße Beispiele 1 und 2). 60 Minuten nach Kochbeginn, also nach dem Beenden des Kochens, wurde der Sud durch Zugabe eines thermisch separat vorbehandelten Hopfenprodukts gehopft. Im Vergleichsbeispiel wurde eine vergleichbare Würze aus denselben Rohstoffen erzeugt und identisch thermisch behandelt wie die erfindungsgemäße Würze, mit der Ausnahme, dass keine Feststoffabtrennung aus der Würze während der thermischen Behandlung erfolgte (Vergleichsbeispiel). Die angegebenen Analysewerte beziehen sich auf die Kühlmittewürze. Anhand der nachfolgenden Tabelle angegebenen Gesamtherstellzeit für einen Sud von Beginn des Einmaischens bis zum Ende der Würzekühlung wird deutlich, dass durch die erfindungsgemäße Abscheidung der Feststoffpartikel vor dem Ende des Ausschlagens der Würze der Whirlpoolschritt eingespart werden kann, was sich in einer im Mittel um 40 Minuten verkürzten Gesamtzeit äußert. Hierbei setzt sich die eingesparte Zeit aus einer gegenüber dem herkömmlichen Verfahren mit Whirlpoolschritt um 10 Minuten verkürzten Dauer des Ausschlagens, Entfall der 20-minütigen Whirlpoolrast und eine um 10 Minuten verkürzte Dauer der Würzekühlung zusammen, da bei einer Benutzung des Whirlpools dieser im Vergleich zur erfindungsgemäßen Vorrichtung/Verfahren langsamer entleert werden muss, um ein Auseinanderlaufen des Trubkegels am Boden des Whirlpools zu vermeiden.

| Parameter | Einheit | erfindungsgemäße Beispiele (mit Zentrifuge) | | | Vergleichsbeispiel (ohne Zentrifuge) |
|---|---|---|---|---|---|
| | | Beispi el 1 | Beispi el 2 | Mittelwer t der Beispiele 1 und 2 | |
| Gesamtherstellzeit von Start Maischen bis Ende Kühlen | Min | 315 | 305 | 310 | 350 |
| Extrakt | % | 12,3 | 12,3 | 12,3 | 11,8 |
| pH | | - | 5,88 | 5,88 | 5,89 |
| Trübung Gesamtsud bei Kochende | EBC | 200 | 180 | 190 | 1.550 |
| Bittereinheiten | EBC | 71,8 | 90,3 | 81,1 | 55,4 |
| Hopfenausbeute (bezogen auf Bittereinheiten) | % | 47,5 | 56 | 51,8 | 44 |
| Iso-$\alpha$-Säuren | mg/l | 82,3 | 91,9 | 87,1 | 59 |
| Hopfenausbeute (bezogen auf Iso-$\alpha$-Säuren) | % | 55 | 57 | 56 | 47,5 |
| Zinkgehalt | mg/l | 0,17 | 0,16 | 0,165 | 0,14 |
| Endvergärungsgrad | % | 83 | 81 | 82 | 79 |
| Forciertest (0/40 °C) | Warmtage (relative Werte) | 1,38 | 1,34 | 1,36 | 1,00 |

Erfindungsgemäß verwendete Messmethoden:

Bittereinheiten (EBC): Brautechnische Analysenmethode; Methodensammlung der Mitteleuropäischen Brautechnischen Analysenkommission (MEBAK); Band 2; 4. Auflage, neubearbeitet und ergänzt; 2002; herausgegeben vom Vorsitzenden Prof. Dr. H. Miedaner; Methode 2.17.1

Iso-$\alpha$-Säuren: HPLC001/02 2009-2

Zink: DIN EN ISO 11885:2009; Brautechnische Analysenmethode; Methodensammlung der Mitteleuropäischen Brautechnischen Analysenkommission (MEBAK); Band 2; 4. Auflage, neubearbeitet und ergänzt; 2002; herausgegeben vom Vorsitzenden Prof. Dr. H. Miedaner; Seiten 159 und 160; Methode 2.29.8

Forciertest (0/40 °C): Brautechnische Analysenmethode; Methodensammlung der Mitteleuropäischen Brautechnischen Analysenkommission (MEBAK); Band 2; 4. Auflage, neubearbeitet und ergänzt; 2002; herausgegeben vom Vorsitzenden Prof. Dr. H. Miedaner; Methode 2.14.2.1; die angegebenen Messwerte wurden auf den Wert des Vergleichsbeispiels (= 1,00) normiert.

Wie den in der vorstehenden Tabelle dargestellten Untersuchungsergebnissen zu entnehmen ist, ist bei den erfindungsgemäßen Beispielen die Hopfenausbeute signifikant erhöht. Dies gilt sowohl in Bezug auf die Bittereinheiten, als auch in Bezug auf die Iso-$\alpha$-Säuren. Darüber hinaus sind der Zink- und der Extraktgehalt bei den erfindungsgemäß erzeugten Würzen vergleichbar mit den herkömmlich hergestellten Würzen, wenn nicht sogar etwas erhöht. Schließlich konnte mit den erfindungsgemäß hergestellten Würzen ein im Mittel um 3 %-Punkte höherer Endvergärungsgrad erzielt werden, was zusätzlich auf eine gute Hefeversorgung hindeutet.

Vorteilhafte Ausführungsformen der erfindungsgemäß beanspruchten Gegenstände sind Gegenstand der Zeichnung. Dabei ist:

Fig. 1 eine schematische Darstellung einer ersten Ausführungsformen der erfindungsgemäßen Vorrichtung V;

Fig. 2 eine schematische Darstellung einer zweiten Ausführungsformen der erfindungsgemäßen Vorrichtung V;

Fig. 3 eine schematische Darstellung einer dritten Ausführungsformen der erfindungsgemäßen Vorrichtung V;

Fig. 4 eine schematische Darstellung einer vierten Ausführungsformen der erfindungsgemäßen Vorrichtung V; und

Fig. 5 eine schematische Darstellung einer fünften Ausführungsformen der erfindungsgemäßen Vorrichtung V.

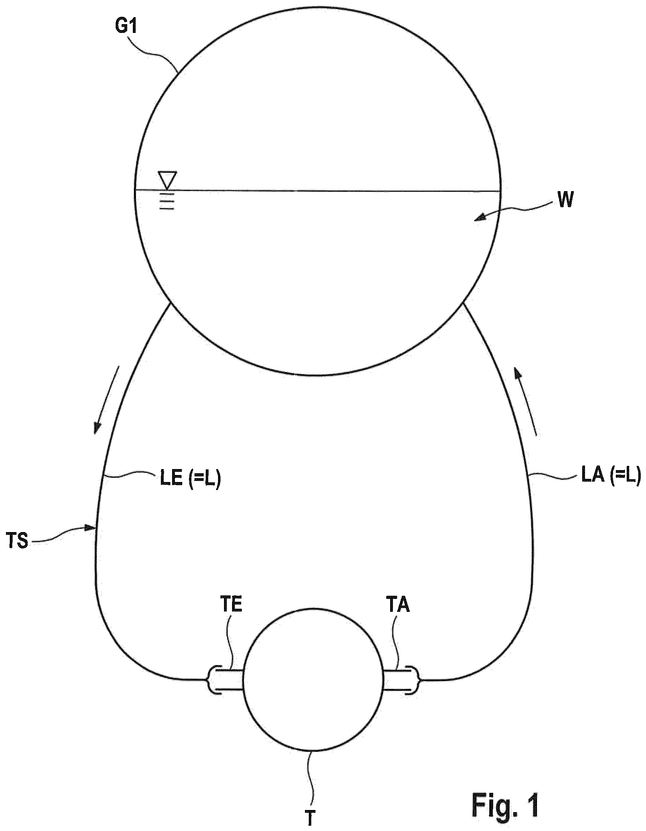

Fig. 1 zeigt eine erste Ausführungsform der erfindungsgemäßen Vorrichtung V, welche eine Trennvorrichtung T aufweist. Die Trennvorrichtung T weist einen Einlauf TE und einen Auslauf TA auf. Der Einlauf TE der Trennvorrichtung T ist über eine Einlaufleitung LE mit einem ersten Gefäß G1 in Fluidverbindung. Der Auslauf TA der Trennvorrichtung T ist über eine Auslaufleitung LA mit dem ersten Gefäß G1 in Fluidverbindung. Die Einlaufleitung LE und die Auslaufleitung LA stellen beide Leitungen L im Sinne der Erfindung dar. Das erste Gefäß G1 ist zum Kochen oder Heißhalten einer Würze W geeignet und ist beispielsweise eine Würzepfanne oder eine Würzeheißhalteeinrichtung, und/oder enthält die Würze W, welche eine Koch- oder Heißhaltetemperatur aufweist. Der beispielhafte Befüllungsgrad der Trennvorrichtung T mit der Würze W ist durch die Niveaumarkierung im ersten Gefäß G1 angegeben. Die Trennvorrichtung T ist zum wenigstens teilweisen Abtrennen von Feststoffen aus der Würze W geeignet und ist beispielsweise ein Tellerseparator bzw. Tellerzentrifuge oder eine Dekantierzentrifuge.

Bei der Durchführung des erfindungsgemäßen Verfahrens gemäß der ersten Ausführungsform wird dem ersten Gefäß G1 eine Teilmenge der Würze W, während des Kochens oder des Heißhaltens der Würze W und/oder während die Würze W eine Koch- oder Heißhaltetemperatur aufweist, entnommen und als ein Teilstrom TS der Würze W über die Einlaufleitung LE und dem Einlauf TE der Trennvorrichtung T zugeführt. In der Trennvorrichtung T wird wenigstens ein Teil der Feststoffe mittels Zentrifugieren aus der Würze W abgetrennt, wobei während des Zentrifugierens eine G-Zahl von $\geq$ 1.000 g erreicht wird. Die von Feststoffen teilweise oder vollständig befreite Würze W verlässt die Trennvorrichtung T über den Auslauf TA der Trennvorrichtung T und wird über die Auslaufleitung LA wieder dem ersten Gefäß G1, beispielsweise der Würzepfanne, zugeführt. Die Strömungsrichtung der Würze W durch die Leitungen ist in den Figuren durch die Pfeile angedeutet. In den Figuren sind aus Gründen der Übersichtlichkeit einige Vorrichtungskomponenten, insbesondere optionale Vorrichtungskomponenten, wie beispielsweise der Auslass der Trennvorrichtung T für die abgetrennten Feststoffe, Pumpen, Sensoren wie Temperaturfühler, Ventile und Steuergeräte weggelassen.

Vorteil dieser Ausführungsform ist, dass die Würze W während der thermischen Behandlung im ersten Gefäß G1 über den Teilstrom TS kontinuierlich oder diskontinuierlich an Feststoffen abgereichert werden kann.

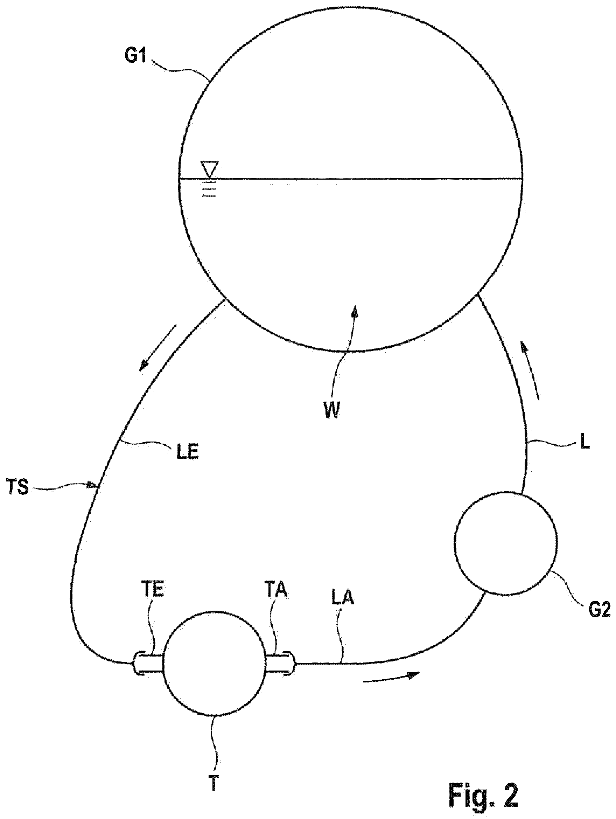

Fig. 2 zeigt eine zweite Ausführungsform der erfindungsgemäßen Vorrichtung V, die im Wesentlichen identisch mit der vorstehend beschriebenen, ersten Ausführungsform der erfindungsgemäßen Vorrichtung V ist, sodass nachfolgend nur die Unterschiede zur ersten Ausführungsform erläutert werden. Bei der zweiten Ausführungsform ist der Auslauf TA der Trennvorrichtung T über eine Auslaufleitung LA mit einem zweiten Gefäß G2 in Fluidverbindung, wobei bei dieser Ausführungsform das zweite Gefäß G2 nicht identisch mit dem ersten Gefäß G1 ist und beispielsweise ein Würzeerwärmer oder ein Außenkocher ist. In dieser Ausführungsform ist das zweite Gefäß G2 ferner mit dem ersten Gefäß G1 über eine Leitung L in Fluidverbindung. In dieser Ausführungsform kann das erste Gefäß G1 beispielsweise eine Würzepfanne oder eine nicht beheizbarer Würzebottich sein.

Die Durchführung des erfindungsgemäßen Verfahrens gemäß der zweiten Ausführungsform erfolgt im Wesentlichen identisch zum vorstehend beschriebenen Verfahren gemäß der ersten Ausführungsform, mit der Ausnahme, dass die wenigstens teilweise von Feststoffen befreite Würze W über die Auslaufleitung LA dem zweiten Gefäß G2 zugeführt wird, wo die Würze W für den Fall, dass das zweite Gefäß G2 ein Würzeerwärmer oder ein Außenkocher ist, auf eine vorgegebene Temperatur erwärmt wird. Vom zweiten Gefäß G2 wird die erwärmte Würze W über die Leitung L wieder in das erste Gefäß G1 überführt.

Vorteil dieser Ausführungsform ist, dass die Würze W unmittelbar vor der thermischen Behandlung im zweiten Gefäß G2 an Feststoffen abgereichert werden kann, wodurch ein Fouling im zweiten Gefäß G2, beispielsweise im Außenkocher, vermindert wird.

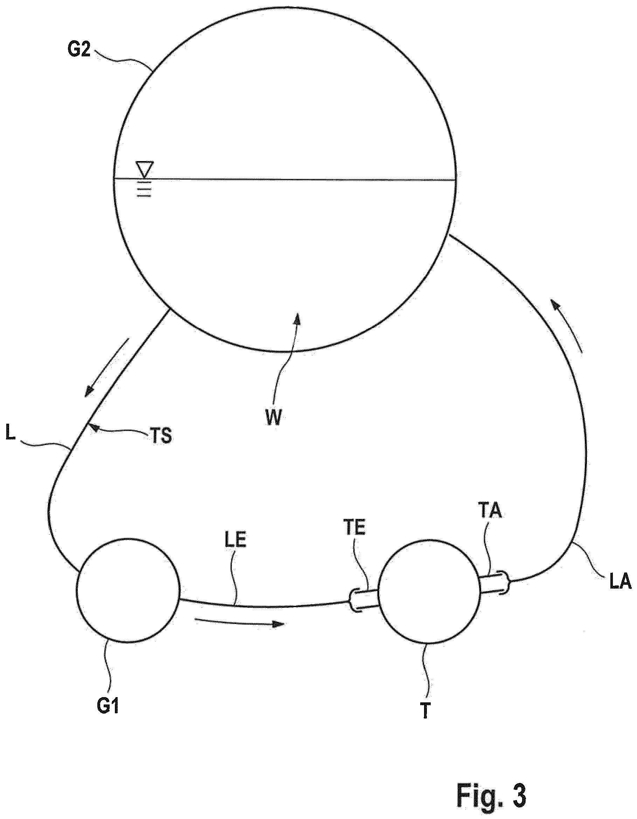

Fig. 3 zeigt eine dritte Ausführungsform der erfindungsgemäßen Vorrichtung V, die im Wesentlichen identisch mit der vorstehend beschriebenen Vorrichtung V gemäß der zweiten Ausführungsform ist, sodass nachfolgend nur die Unterschiede zur zweiten Ausführungsform erläutert werden. In der dritten Ausführungsform ist das erste Gefäß G1 beispielsweise ein Würzeerwärmer oder ein Außenkocher. Ferner kann das zweite Gefäß G2 beispielsweise eine Würzepfanne oder eine nicht beheizbarer Würzebottich sein. Das erste Gefäß G1 und das zweite Gefäß G2 enthalten jeweils Würze W, welche die Koch- oder Heißhaltetemperatur aufweist.

Die Durchführung des erfindungsgemäßen Verfahrens gemäß der dritten Ausführungsform erfolgt im Wesentlichen identisch zum vorstehend beschriebenen Verfahren gemäß der zweiten Ausführungsform, mit der Ausnahme, dass die Würze W dem zweiten Gefäß G2 entnommen und über die Leitung L dem ersten Gefäß G1 zugeführt wird. Im ersten Gefäß G1 wird die Würze W erwärmt bzw. auf die Kochtemperatur gebracht und dann über die Einlaufleitung LE der Trennvorrichtung T zugeführt. In der Trennvorrichtung T wird die Würze W wenigstens teilweise von Feststoffen befreit und über die Auslaufleitung LA dem zweiten Gefäß G2 zugeführt. Vom zweiten Gefäß G2 kann die Würze W über die Leitung L wieder in das erste Gefäß G1 überführt werden.

Vorteil dieser Ausführungsform ist, dass die bei der thermischen Behandlung im ersten Gefäß G1 entstandenen Feststoffe unmittelbar nach deren Entstehung abgereichert werden können, und folglich der Feststoffgehalt der Würze im zweiten Gefäß G2, beispielsweise der Würzepfanne, vermindert wird. Dies wirkt sich beispielsweise vorteilhaft auf die Umsetzung der Hopfenbestandteile und die Hopfenausbeute, wie eingangs beschrieben, aus.

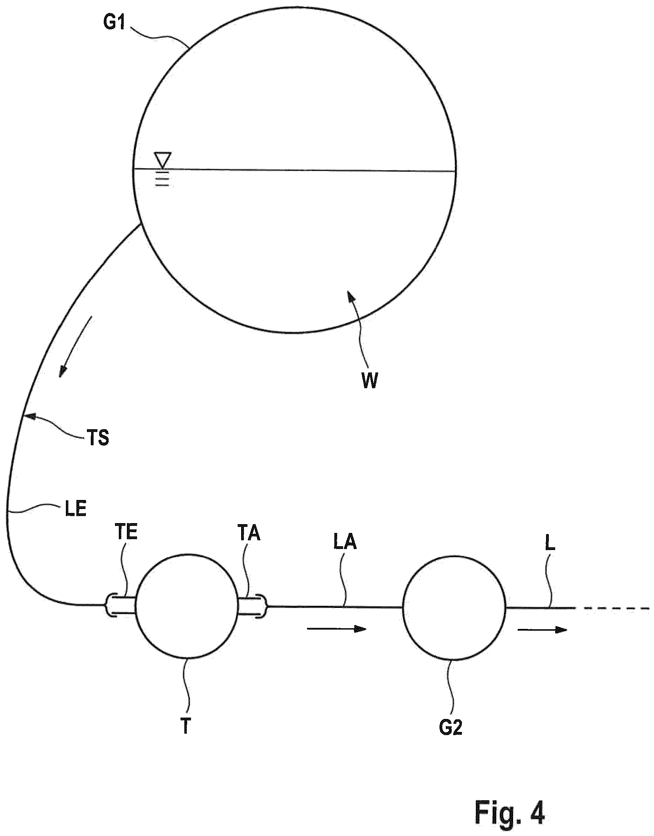

Fig. 4 zeigt eine vierte Ausführungsform der erfindungsgemäßen Vorrichtung V, die im Wesentlichen identisch mit der vorstehend beschriebenen, zweiten Ausführungsform der erfindungsgemäßen Vorrichtung V ist, sodass nachfolgend nur die Unterschiede zur zweiten Ausführungsform erläutert werden. In der vierten Ausführungsform ist die Trennvorrichtung T über den Auslauf TA und über die Leitung LA mit dem zweiten Gefäß G2 in Fluidverbindung. Das zweite Gefäß G2 steht jedoch nicht mit dem ersten Gefäß G1 über eine Leitung in Fluidverbindung, sondern ist über die Leitung L mit einer Vorrichtung oder einem Gefäß eines nachfolgenden Herstellungsschritts (nicht dargestellt), beispielsweise einem Würzekühler, verbunden. Das zweite Gefäß G2 ist nur zum Aufnehmen und Zwischenspeichern der Würze geeignet und nicht zum Abtrennen von Feststoffen. Das zweite Gefäß G2 ist beispielsweise ein Würzespeicher, jedoch kein Whirlpool oder ein Setzdekanter.

Das erfindungsgemäße Verfahren der vierten Ausführungsform ist im Wesentlichen identisch mit dem vorstehend beschriebenen Verfahren gemäß der zweiten Ausführungsform, sodass nachfolgend nur die Unterschiede zur zweiten Ausführungsform erläutert werden. Die wenigstens teilweise von Feststoffen befreite Würze W wird über den Auslauf TA der Trennvorrichtung T und über die Leitung LA dem zweiten Gefäß G2 zugeführt und dort zwischengespeichert. Aus dem zweiten Gefäß G2 wird die Würze W jedoch nicht wieder dem ersten Gefäß G1 zugeführt, sondern über die Leitung L der weiteren Behandlung bzw. Verarbeitung im nachfolgenden Herstellungsschritt zugeführt. Beispielsweise kann die Würze W einem Würzekühler (nicht dargestellt) zugeführt und dort auf Anstelltemperatur gekühlt werden.

Mit der vierten Ausführungsform kann eine schnelle und effektive teilweise oder sogar vollständige Abtrennung von Feststoffen aus der Würze W erzielt werden. Hierdurch werden die vorstehend diskutierten Vorteile, insbesondere den Wegfall des Whirlpoolschritts, erreicht. Das Vorsehen eines zweiten Gefäßes G2 erhöht die zeitliche Flexibilität in Bezug auf den oder die nachfolgenden Verfahrensschritte der weiteren Wurzelbehandlung oder -verwendung.

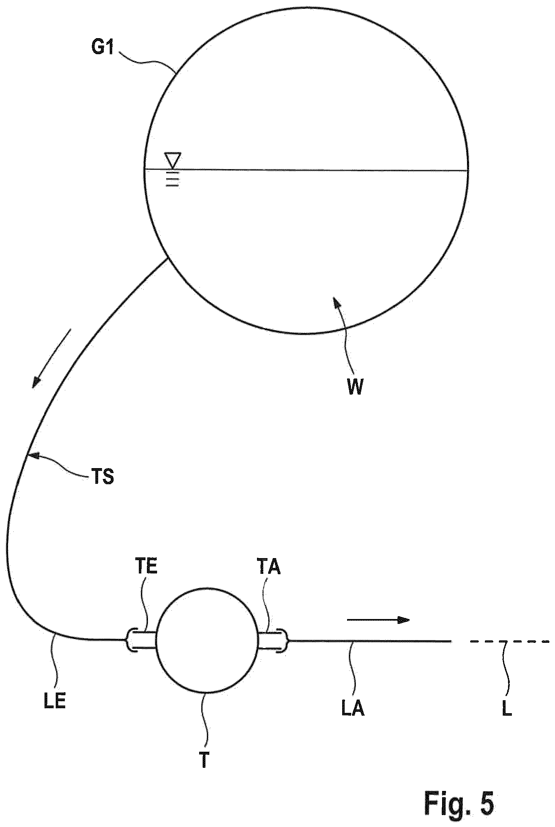

Schließlich zeigt Fig. 5 eine fünfte Ausführungsform der erfindungsgemäßen Vorrichtung V, die im Wesentlichen identisch mit der vorstehend beschriebenen, vierten Ausführungsform der erfindungsgemäßen Vorrichtung V ist, sodass nachfolgend nur die Unterschiede zur vierten Ausführungsform erläutert werden. In der fünften Ausführungsform ist die Trennvorrichtung T über den Auslauf TA und über die Leitung LA bzw. L mit einer Vorrichtung oder einem Gefäß eines nachfolgenden Herstellungsschritts (nicht dargestellt), beispielsweise dem Würzekühler, in Fluidverbindung. Diese Ausführungsform der erfindungsgemäßen Vorrichtung weist kein zweites Gefäß G2, keinen Whirlpool und auch keinen Setzdekanter auf.

Das erfindungsgemäße Verfahren der fünften Ausführungsform ist im Wesentlichen identisch mit dem der vierten Ausführungsform, sodass nachfolgend nur die Unterschiede zur vierten Ausführungsform erläutert werden. Die wenigstens teilweise von Feststoffen befreite Würze W wird keinem zweiten Gefäß G2 zugeführt und auch nicht wieder zurück ins erste Gefäß G1 geführt. Vielmehr wird die Würze W über den Auslauf TA der Trennvorrichtung T und über die Leitung LA bzw. L unmittelbar der weiteren Behandlung bzw. Verarbeitung im nachfolgenden Herstellungsschritt zugeführt. Beispielsweise kann die Würze W von der Trennvorrichtung T unmittelbar dem Würzekühler (nicht dargestellt) zugeführt und dort auf Anstelltemperatur gekühlt werden.

Die fünfte Ausführungsform erzielt ebenfalls die vorstehend diskutierten Vorteile der vierten Ausführungsform (mit Ausnahme der Vorteile des zweiten Gefäßes G2). Darüber hinaus stellt sie zusammen mit der vorstehend beschriebenen ersten Ausführungsform eine anlagentechnisch/konstruktiv besonders einfache und kostengünstige Verwirklichung der vorliegenden Erfindung dar.

**Patentansprüche**

1. Verfahren zum Herstellen oder Behandeln einer Würze (W), vorzugsweise zum Kochen oder Heißhalten einer Würze (W), wenigstens umfassend die Schritte:

   (a) Kochen oder Heißhalten der Würze (W); und
   (b) während des Kochens oder des Heißhaltens der Würze (W) oder während die Würze (W) eine Koch- oder Heißhaltetemperatur aufweist, wenigstens teilweises Abtrennen von Feststoffen aus der Würze (W) mittels Zentrifugieren;

      wobei während des Zentrifugierens eine G-Zahl $\geq$ 1.000 g, vorzugsweise zwischen 1.000 und 12.000 g, vorzugsweise zwischen 2.000 und 12.000 g, vorzugsweise zwischen 2.000 und 10.000 g, vorzugsweise zwischen 3.000 und 10.000 g, vorzugsweise zwischen 5.000 und 10.000 g, insbesondere zwischen 5.000 und 8.000 g, erreicht wird, wobei g = 9,81 m/s$^2$ ist;
      wobei zum Abtrennen der Feststoffe ein Teilstrom (TS) der Würze (W) einem ersten Gefäß (G1), welches die Würze (W) bei der Koch- oder Heißhaltetemperatur enthält, entnommen wird, die Feststoffe teilweise oder vollständig aus dem Teilstrom (TS) der Würze (W) abgetrennt werden, und der teilweise oder vollständig von Feststoffen befreite Teilstrom (TS) der Würze (W) dem ersten Gefäß (G1) oder einem zweiten Gefäß (G2) zugeführt wird, wobei das zweite Gefäß (G2) die Würze (W) bei Koch- oder Heißhaltetemperatur enthält; und
      wobei das erste Gefäß (G1) und das zweite Gefäß (G2) jeweils und unabhängig voneinander ausgewählt ist aus einer Gruppe, die besteht aus: einer Würzepfanne, einer Würzeheißhalteeinrichtung, einem Würzeerwärmer, vorzugsweise einem Außenkocher, einem Würzespeicher und einer Leitung (L).

2. Verfahren nach Anspruch 1, **dadurch gekennzeichnet, dass** das Abtrennen der Feststoffe aus der Würze (W) zwischen dem Erreichen der Koch- oder Heißhaltetemperatur der Würze (W), vorzugsweise zwischen 5 min, vorzugsweise 10 min, insbesondere 20 min, nach dem Erreichen der Koch- oder Heißhaltetemperatur der Würze (W), und 40 min, vorzugsweise 35 min, nach dem Erreichen der Koch- oder Heißhaltetemperatur der Würze (W) erfolgt.

3. Verfahren nach Anspruch 1 oder 2, **dadurch gekennzeichnet, dass** das Abtrennen der Feststoffe aus der Würze (W) spätestens beim Beginn des Ausschlagens der Würze (W), vorzugsweise 5 min vor Beginn des Ausschlagens der Würze (W), insbesondere 10 min vor Beginn des Ausschlagens der Würze (W), endet.

4. Verfahren nach einem der Ansprüche 1 bis 3, **dadurch gekennzeichnet, dass** zwischen dem Beginn des Ausschlagens der Würze (W) und dem Abschluss des Kühlens der Würze (W) auf Anstelltemperatur kein Abtrennen von Feststoffen aus der Würze (W), insbesondere kein Abtrennen von Feststoffen aus der Würze (W) mittels eines Whirlpools oder eines Setzdekanters, erfolgt.

5. Verfahren nach Anspruch 1 oder 2, **dadurch gekennzeichnet, dass** das Abtrennen der Feststoffe aus der Würze (W) spätestens mit dem Abschluss des Ausschlagens der Würze (W), vorzugsweise 2 min vor dem Abschluss des Ausschlagens der Würze (W), insbesondere 5 min vor dem Abschluss des Ausschlagens der Würze (W), endet.

6. Verfahren nach einem der Ansprüche 1 bis 5, **dadurch gekennzeichnet, dass** zwischen dem Abschluss des Ausschlagens der Würze (W) und dem Abschluss des Kühlens der Würze (W) auf Anstelltemperatur kein Abtrennen von Feststoffen aus der Würze (W), insbesondere kein Abtrennen von Feststoffen mittels eines Whirlpools oder eines Setzdekanters, erfolgt.

7. Verfahren nach einem der Ansprüche 1 bis 4 und 6, **dadurch gekennzeichnet, dass** das Abtrennen der Feststoffe aus der Würze (W) vor einer ersten Hopfengabe, vor einer zweiten Hopfengabe und/oder vor einer dritten Hopfengabe zur Würze (W) erfolgt.

8. Verfahren nach einem der Ansprüche 1 bis 7, **dadurch gekennzeichnet, dass** das Abtrennen der Feststoffe aus der Würze (W) kontinuierlich erfolgt; und/oder

das Abtrennen der Feststoffe aus der Würze (W) mittels einer Trenneinrichtung (T), vorzugsweise eines Zentrifugalseparators oder einer Zentrifuge, insbesondere eines Tellerseparators oder eine Dekantierzentrifuge, erfolgt; und/oder

der Gesamtsud der Würze (W) nach dem Beendens des Abtrennens der Feststoffe eine Trübung zwischen 20 und 400 EBC, vorzugsweise zwischen 50 und 150 EBC, aufweist.

9. Verfahren nach einem der Ansprüche 1 bis 8, **dadurch gekennzeichnet, dass**

das erste Gefäß (G1) die Würzepfanne oder die Würzeheißhalteeinrichtung ist; und das zweite Gefäß (G2) die Würzepfanne, die Würzeheißhalteeinrichtung, der Würzeerwärmer oder der Würzespeicher ist; und/oder

das Abtrennen der Feststoffe vorzugsweise derart erfolgt, dass der Teilstrom (TS) der Würze (W) unmittelbar nach dem Abtrennen der Feststoffe eine Trübung zwischen 20 und 100 EBC, vorzugsweise zwischen 40 und 80 EBC, aufweist.

10. Vorrichtung (V) zum wenigstens teilweisen Abtrennen von Feststoffen aus einer Würze (W) während des Kochens oder Heißhaltens der Würze (W) oder während die Würze (W) eine Koch- oder Heißhaltetemperatur aufweist, vorzugsweise zum Durchführen des Schritts (b) des Verfahrens nach einem der Ansprüche 1 bis 9, wobei die Vorrichtung wenigstens aufweist:

eine Trenneinrichtung (T) zum wenigstens teilweisen Abtrennen von Feststoffen aus der Würze (W), vorzugsweise aus einem Teilstrom (TS) der Würze (W), mittels Zentrifugieren; und

ein erstes Gefäß (G1), wobei das erste Gefäß (G1) die Würze (W) bei der Koch- oder Heißhaltetemperatur enthält;

wobei die Trenneinrichtung (T) geeignet ist, während des Zentrifugierens eine G-Zahl $\geq$ 1.000 g, vorzugsweise zwischen 1.000 und 12.000 g, vorzugsweise zwischen 2.000 und 12.000 g, vorzugsweise zwischen 2.000 und 10.000 g, vorzugsweise zwischen 3.000 und 10.000 g, vorzugsweise zwischen 5.000 und 10.000 g, insbesondere zwischen 5.000 und 8.000 g, zu erreichen, wobei g = 9,81 m/s$^2$ ist; und

wobei ein Einlauf (TE) der Trenneinrichtung (T) mit dem ersten Gefäß (G1) über eine Einlaufleitung (LE) in Fluidverbindung ist; und

wobei das erste Gefäß (G1) eine Würzepfanne, eine Würzeheißhalteeinrichtung, ein Würzeerwärmer, vorzugsweise ein Außenkocher, ein Würzespeicher oder eine Leitung (L) ist;

wobei ein Auslauf (TA) der Trenneinrichtung (T) über eine Auslaufleitung (LA) mit dem ersten Gefäß (G1) oder einem zweiten Gefäß (G2) in Fluidverbindung ist; wobei das zweite Gefäß (G2) die Würze (W) bei der Koch- oder Heißhaltetemperatur enthält; und

wobei das zweite Gefäß (G2) eine Würzepfanne, eine Würzeheißhalteeinrichtung, ein Würzeerwärmer, vorzugsweise ein Außenkocher, ein Würzespeicher oder eine Leitung (L) ist.

11. Vorrichtung nach Anspruch 10, **dadurch gekennzeichnet, dass** das erste Gefäß (G1) die Würzepfanne oder die Würzeheißhalteeinrichtung ist, und das zweite Gefäß (G2) der Würzespeicher ist.

12. Vorrichtung nach Anspruch 10 oder 11, **dadurch gekennzeichnet, dass** die Trenneinrichtung (T) zum kontinuierlichen oder diskontinuierlichen Abtrennen von Feststoffen aus der Würze (W) geeignet ist; und/oder

die Trenneinrichtung (T) ein Zentrifugalseparator oder eine Zentrifuge, vorzugsweise ein Tellerseparator oder eine Dekantierzentrifuge, ist; und/oder

die Trenneinrichtung (T) geeignet ist, die Würze (W), vorzugsweise die Würze (W) des Teilstroms (TS), unmittelbar nach dem wenigstens teilweisen Abtrennen der Feststoffe auf eine Trübung zwischen 20 und 100 EBC, vorzugsweise zwischen 40 und 80 EBC, einzustellen.

13. Würzebereitungsvorrichtung (S) zum Herstellen einer Würze in der Bierbrauerei oder Getränkeindustrie,

wobei die Würzebereitungsvorrichtung (S) die Vorrichtung (V) nach einem der Ansprüche 10 bis 12 aufweist; und

wobei die Würzebereitungsvorrichtung (S) vorzugsweise keinen Whirlpool und keinen Setzdekanter aufweist.

**14.** Verwendung der Vorrichtung (V) nach einem der Ansprüche 10 bis 12 zum wenigstens teilweisen Abtrennen von Feststoffen aus einer Würze (W) während des Kochens oder Heißhaltens der Würze (W) oder während die Würze (W) eine Koch- oder Heißhaltetemperatur aufweist;

wobei der Gesamtsud der Würze (W) unmittelbar nach dem Beenden des Abtrennens der Feststoffe aus der Würze (W) vorzugsweise eine Trübung zwischen 20 und 400 EBC, insbesondere zwischen 50 und 150 EBC, aufweist; und/oder

ein Teilstrom (TS) der Würze (W) unmittelbar nach dem wenigstens teilweisen Abtrennen der Feststoffe vorzugsweise auf eine Trübung zwischen 20 und 100 EBC, insbesondere zwischen 40 und 80 EBC, eingestellt wird.

**Claims**

**1.** A process for producing or treating a wort (W), preferably for boiling or holding a wort (W) hot, comprising at least the steps of:

(a) boiling or holding the wort (W) hot; and
(b) during the boiling or holding of the wort (W) hot, or while the wort (W) is at a boiling or hot-holding temperature, at least partially separating solids from the wort (W) by centrifugation;
wherein during centrifugation a G-number $\geq 1,000\,g$, preferably between 1,000 and 12,000 g, preferably between 2,000 and 12,000 g, preferably between 2,000 and 10,000 g, preferably between 3,000 and 10,000 g, preferably between 5,000 and 10,000 g, in particular between 5,000 and 8,000 g, is achieved, where g = 9.81 m/s$^2$;
wherein, in order to separate the solids, a partial stream (TS) of the wort (W) is taken from a first vessel (G1) containing the wort (W) at the boiling or hot-holding temperature, the solids are partially or completely separated from the partial stream (TS) of the wort (W), and the partial stream (TS) of the wort (W), which has been partially or completely freed of solids, is fed to the first vessel (G1) or a second vessel (G2), wherein the second vessel (G2) contains the wort (W) at boiling or hot-holding temperature; and
wherein the first vessel (G1) and the second vessel (G2) are each and independently of each other selected from a group consisting of: a wort kettle, a wort hot-holding device, a wort heater, preferably an external cooker, a wort storage vessel, and a pipe (L).

**2.** The process according to claim 1, **characterized in that** the separation of the solids from the wort (W) takes place between the wort (W) reaching the boiling or hot-holding temperature, preferably between 5 min, preferably 10 min, in particular 20 min, after the wort (W) has reached the boiling or hot-holding temperature, and 40 minutes, preferably 35 minutes, after the wort (W) has reached the boiling or hot-holding temperature.

**3.** The process according to claim 1 or 2, **characterized in that** the separation of the solids from the wort (W) ends at the latest at the start of the knocking-out of the wort (W), preferably 5 min before the start of the knocking-out of the wort (W), in particular 10 min before the start of the knocking-out of the wort (W).

**4.** The process according to one of claims 1 to 3, **characterized in that** between the start of the knocking-out of the mash (W) and the completion of the cooling of the mash (W) to the pitching temperature, no separation of solids from the mash (W), in particular no separation of solids from the mash (W) by means of a whirlpool or a settling decanter, takes place.

**5.** The process according to claim 1 or 2, **characterized in that** the separation of solids from the wort (W) ends at the latest upon completion of the knocking-out of the wort (W), preferably 2 minutes before completion of the knocking-out of the wort (W), in particular 5 minutes before completion of the knocking-out of the wort (W).

**6.** The process according to one of claims 1 to 5, **characterized in that** between the end of the knocking-out of the wort (W) and the end of the cooling of the wort (W) to the pitching temperature, no separation of solids from the wort (W), in particular no separation of solids by means of a whirlpool or a settling decanter, takes place.

**7.** The process according to one of claims 1 to 4 and 6, **characterized in that** the solids are separated from the wort (W) before a first addition of hops, before a second addition of hops and/or before a third addition of hops to the wort (W).

8. The process according to one of claims 1 to 7, **characterized in that** the separation of the solids from the wort (W) is carried out continuously; and/or

   the solids are separated from the wort (W) by means of a separating device (T), preferably a centrifugal separator or a centrifuge, in particular a disc separator or a decanting centrifuge; and/or
   the total wort (W) has a turbidity of between 20 and 400 EBC, preferably between 50 and 150 EBC, after the solids have been separated.

9. The process according to one of claims 1 to 8, **characterized in that**

   the first vessel (G1) is the wort kettle or the wort hot-holding device; and the second vessel (G2) is the wort kettle, the wort hot-holding device, the wort heater or the wort storage tank; and/or
   the separation of the solids is preferably carried out in such a way that the partial flow (TS) of the wort (W) has a turbidty of between 20 and 100 EBC, preferably between 40 and 80 EBC, immediately after the separation of the solids.

10. Device (V) for at least partially separating solids from a wort (W) during boiling or holding the wort (W) hot, or while the wort (W) is at a boiling or hot-holding temperature, preferably for carrying out step (b) of the process according to any one of claims 1 to 9, the apparatus comprising at least:

    a separation device (T) for at least partially separating solids from the wort (W), preferably from a partial stream (TS) of the wort (W), by means of centrifugation; and
    a first vessel (G1), wherein the first vessel (G1) contains the wort (W) at the boiling or hot-holding temperature; wherein the separation device (T) is suitable for achieving a G-number $\geq$ 1,000 g, preferably between 1,000 and 12,000 g, preferably between 2,000 and 12,000 g, preferably between 2,000 and 10,000 g, preferably between 3,000 and 10,000 g, preferably between 5,000 and 10,000 g, in particular between 5,000 and 8,000 g, during centrifugation, wherein g = 9.81 m/s$^2$; and
    wherein an inlet (TE) of the separation device (T) is in fluid communication with the first vessel (G1) via an inlet line (LE); and
    wherein the first vessel (G1) is a wort kettle, a wort hot-holding device, a wort heater, preferably an external boiler, a wort storage tank or a pipeline (L);
    wherein an outlet (TA) of the separating device (T) is in fluid communication with the first vessel (G1) or a second vessel (G2) via an outlet pipe (LA);
    wherein the second vessel (G2) contains the wort (W) at the boiling or hot-holding temperature; and
    wherein the second vessel (G2) is a wort kettle, a wort hot-holding device, a wort heater, preferably an external boiler, a wort storage tank or a pipeline (L).

11. The device according to claim 10, **characterized in that** the first vessel (G1) is the wort kettle or the wort hot-holding device, and the second vessel (G2) is the wort storage tank.

12. The device according to claim 10 or 11, **characterized in that** the separating device (T) is suitable for continuously or discontinuously separating solids from the wort (W); and/or

    the separating device (T) is a centrifugal separator or a centrifuge, preferably a disc separator or a decanting centrifuge; and/or
    the separating device (T) is suitable for adjusting the wort (W), preferably the wort (W) of the partial stream (TS), immediately after at least partial separation of the solids to a turbidity between 20 and 100 EBC, preferably between 40 and 80 EBC.

13. Wort preparation device (S) for producing wort in the beer brewing or beverage industry,

    wherein the wort preparation device (S) comprises the device (V) according to any one of claims 10 to 12; and
    wherein the wort preparation device (S) preferably does not comprise a whirlpool and a settling decanter.

14. Use of the device (V) according to one of claims 10 to 12 for at least partially separating solids from a wort (W) during boiling or holding the wort (W) hot or while the wort (W) has a boiling or hot-holding temperature;

    wherein the total wort (W) immediately after completion of the separation of solids from the wort (W) preferably has a turbidity between 20 and 400 EBC, in particular between 50 and 150 EBC; and/or
a partial stream (TS) of the wort (W) is adjusted immediately after at least partial separation of the solids,
preferably to a turbidity between 20 and 100 EBC, in particular between 40 and 80 EBC.

**Revendications**

1. Un procédé de préparation ou de traitement d'un moût (W), de préférence pour cuire ou maintenir chaud un moût (W), comprenant au moins les étapes suivantes :

   (a) cuisson ou maintien à température élevée du moût (W) ; et
   (b) pendant la cuisson ou le maintien à température élevée du moût (W) ou pendant que le moût (W) présente une température de cuisson ou de maintien à température élevée, séparation au moins partielle des matières solides du moût (W) par centrifugation ;

   où, pendant la centrifugation, un nombre G ≥ 1 000 g, de préférence compris entre 1 000 et 12 000 g, de préférence compris entre 2 000 et 12 000 g, de préférence compris entre 2 000 et 10 000 g, de préférence entre 3 000 et 10 000 g, de préférence entre 5 000 et 10 000 g, en particulier entre 5 000 et 8 000 g, g = 9,81 m/s$^2$ ;
   un courant partiel (TS) du moût (W) étant prélevé d'un premier récipient (G1) qui contient le moût (W) à la température de cuisson ou de maintien à température, les matières solides étant séparées partiellement ou complètement du courant partiel (TS) du moût (W), et le courant partiel (TS) du moût (W) partiellement ou complètement débarrassé des matières solides est acheminé vers le premier récipient (G1) ou vers un deuxième récipient (G2), le deuxième récipient (G2) contenant le moût (W) à la température de cuisson ou de maintien à température ; et
   le premier récipient (G1) et le deuxième récipient (G2) étant chacun et indépendamment l'un de l'autre choisis parmi un groupe composé : d'une cuve à moût, d'un dispositif de maintien du moût à température élevée, d'un réchauffeur de moût, de préférence d'un cuiseur externe, d'un réservoir de moût et d'une conduite (L).

2. Le procédé selon la revendication 1, **caractérisé en ce que** la séparation des matières solides du moût (W) a lieu entre l'atteinte de la température de cuisson ou de maintien à température élevée du moût (W), de préférence entre 5 minutes, de préférence 10 minutes, en particulier 20 minutes, après l'atteinte de la température de cuisson ou de maintien à température élevée du moût (W), et 40 minutes, de préférence 35 minutes, après que la température de cuisson ou de maintien à température élevée du moût (W) a été atteinte.

3. Le procédé selon la revendication 1 ou 2, **caractérisé en ce que** la séparation des matières solides du moût (W) se termine au plus tard au début du soutirage du moût (W), de préférence 5 minutes avant le début du soutirage du moût (W), en particulier 10 minutes avant le début du soutirage du moût (W).

4. Le procédé selon l'une des revendications 1 à 3, **caractérisé en ce qu'**entre le début du brassage du moût (W) et la fin du refroidissement du moût (W) à la température de fermentation, aucune séparation des matières solides du moût (W) n'est effectuée, en particulier aucune séparation des matières solides du moût (W) au moyen d'un bain à remous ou d'un décanteur.

5. Le procédé selon la revendication 1 ou 2, **caractérisé en ce que** la séparation des matières solides du moût (W) se termine au plus tard à la fin du débourbage du moût (W), de préférence 2 minutes avant la fin du débourbage du moût (W), en particulier 5 minutes avant la fin du débourbage du moût (W).

6. Le procédé selon l'une des revendications 1 à 5, **caractérisé en ce qu'**entre la fin du brassage du moût (W) et la fin du refroidissement du moût (W) à la température de fermentation, aucune séparation des matières solides du moût (W) n'est effectuée, en particulier aucune séparation des matières solides au moyen d'un bain à remous ou d'un décanteur.

7. Le procédé selon l'une des revendications 1 à 4 et 6, **caractérisé en ce que** la séparation des matières solides du moût (W) s'effectue avant un premier ajout de houblon, avant un deuxième ajout de houblon et/ou avant un troisième ajout de houblon au moût (W).

**8.** Le procédé selon l'une des revendications 1 à 7, **caractérisé en ce que** la séparation des matières solides du moût (W) s'effectue en continu ; et/ou

la séparation des matières solides du moût (W) s'effectue à l'aide d'un dispositif de séparation (T), de préférence un séparateur centrifuge ou une centrifugeuse, en particulier un séparateur à plateau ou une centrifugeuse de décantation ; et/ou

le moût total (W) présente, après la fin de la séparation des matières solides, une turbidité comprise entre 20 et 400 EBC, de préférence entre 50 et 150 EBC.

**9.** Le procédé selon l'une des revendications 1 à 8, **caractérisé en ce que**

le premier récipient (G1) est la cuve à moût ou le dispositif de maintien du moût à température élevée ; et le deuxième récipient (G2) est la cuve à moût, le dispositif de maintien du moût à température élevée, le réchauffeur de moût ou le réservoir de moût ; et/ou

la séparation des matières solides s'effectue de préférence de telle sorte que le courant partiel (TS) du moût (W) présente, immédiatement après la séparation des matières solides, une turbidité comprise entre 20 et 100 EBC, de préférence entre 40 et 80 EBC.

**10.** Un dispositif (V) pour séparer au moins partiellement les matières solides d'un moût (W) pendant la cuisson ou le maintien à température élevée du moût (W) ou pendant que le moût (W) présente une température de cuisson ou de maintien à température élevée, de préférence pour réaliser l'étape (b) du procédé selon l'une des revendications 1 à 9, le dispositif comprenant au moins :

un dispositif de séparation (T) pour séparer au moins partiellement les matières solides du moût (W), de préférence d'un courant partiel (TS) du moût (W), au moyen d'une centrifugation ; et

un premier récipient (G1), le premier récipient (G1) contenant le moût (W) à la température de cuisson ou de maintien à température élevée ;

le dispositif de séparation (T) étant adapté pour atteindre, pendant la centrifugation, un nombre G ≥ 1 000 g, de préférence compris entre 1 000 et 12 000 g, de préférence compris entre 2 000 et 12 000 g, de préférence compris entre 2 000 et 10 000 g, de préférence entre 3 000 et 10 000 g, de préférence entre 5 000 et 10 000 g, en particulier entre 5 000 et 8 000 g, g = 9,81 m/s$^2$ ; et

une entrée (TE) du dispositif de séparation (T) étant en communication fluidique avec le premier récipient (G1) via une conduite d'entrée (LE) ; et

le premier récipient (G1) étant une cuve à moût, un dispositif de maintien du moût à température élevée, un réchauffeur de moût, de préférence un cuiseur externe, un réservoir de moût ou une conduite (L) ;

une sortie (TA) du dispositif de séparation (T) étant en communication fluidique avec le premier récipient (G1) ou un deuxième récipient (G2) par l'intermédiaire d'une conduite de sortie (LA) ;

le deuxième récipient (G2) contenant le moût (W) à la température de cuisson ou de maintien à température ; et

le deuxième récipient (G2) étant une cuve à moût, un dispositif de maintien du moût à température élevée, un réchauffeur de moût, de préférence un cuiseur externe, un réservoir de moût ou une conduite (L).

**11.** Le dispositif selon la revendication 10, **caractérisé en ce que** le premier récipient (G1) est la cuve à moût ou le dispositif de maintien du moût à température élevée, et le deuxième récipient (G2) est le réservoir à moût.

**12.** Le dispositif selon la revendication 10 ou 11, **caractérisé en ce que** le dispositif de séparation (T) est adapté à la séparation continue ou discontinue des matières solides du moût (W) ; et/ou

le dispositif de séparation (T) est un séparateur centrifuge ou une centrifugeuse, de préférence un séparateur à plateau ou une centrifugeuse de décantation ; et/ou

le dispositif de séparation (T) est adapté pour ajuster le moût (W), de préférence le moût (W) du courant partiel (TS), immédiatement après la séparation au moins partielle des matières solides, à une turbidité comprise entre 20 et 100 EBC, de préférence entre 40 et 80 EBC.

**13.** Un dispositif de préparation de moût (S) pour la fabrication d'un moût dans la brasserie ou l'industrie des boissons,

le dispositif de préparation de moût (S) comprenant le dispositif (V) selon l'une des revendications 10 à 12 ; et dans lequel le dispositif de préparation de moût (S) ne comprend de préférence ni bain à remous ni décanteur.

14. Utilisation du dispositif (V) selon l'une des revendications 10 à 12 pour séparer au moins partiellement les matières solides d'un moût (W) pendant la cuisson ou le maintien à température élevée du moût (W) ou pendant que le moût (W) présente une température de cuisson ou de maintien à température élevée ;

le moût total (W) présentant, immédiatement après la fin de la séparation des matières solides du moût (W), de préférence une turbidité comprise entre 20 et 400 EBC, en particulier entre 50 et 150 EBC ; et/ou
un courant partiel (TS) du moût (W) est réglé immédiatement après la séparation au moins partielle des matières solides de préférence à une turbidité comprise entre 20 et 100 EBC, en particulier entre 40 et 80 EBC.

Fig. 1

Fig. 2

Fig. 3

Fig. 4

G1

W

TS

TE    TA

LE    T    LA    L

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009324775 A1
- GB 939011 A

- GB 1115970 A

**In der Beschreibung aufgeführte Nicht-Patentliteratur**

- Verfahren mit Nachverdampfung im Vakuum - zwischen Whirlpool und Plattenkühler. **LUDWIG NARZISS et al.** DIE TECHNOLOGIE DER WÜRZEBEREITUNG. WILEY-VCH, 30 November 2008, vol. 2, 526-528